# EUROPÄISCHE PATENTANMELDUNG

(11) **EP 4 001 719 A1**
(43) Veröffentlichungstag der Anmeldung: **25.05.2022**
(21) Anmeldenummer: 21206587.4
(22) Anmeldetag: 05.11.2021
(51) Int. Cl.: F16K 31/06

(54) **SCHALTVENTIL SOWIE VENTILANORDNUNG MIT EINEM SOLCHEN SCHALTVENTIL ZUR REGELUNG EINES MASSENSTROMES**

(30) Priorität: 13.11.2020 DE 102020129993
(71) Anmelder: Otto Egelhof GmbH & Co. KG, 70736 Fellbach (DE)
(72) Erfinder: Willers, Eike, 70469 Stuttgart (DE); Auweder, Andreas, 71665 Vaihingen (DE); Lang-Belz, Markus, 70736 Fellbach (DE)
(74) Vertreter: Patentanwälte Mammel und Maser PartG mbB

(57) **Zusammenfassung**

Die Erfindung betrifft ein Schaltventil sowie eine Ventilanordnung zur Regelung eines Massenstromes in einem Kälte- oder Wärmekreislauf, mit einer Wegerzeugungseinrichtung (21), welche ein U-förmiges Joch (39) mit einem oberen und unteren Schenkel (44, 45) umfasst, die zueinander ausgerichtet sind und einer innerhalb des Jochs (39) positionierten Spule (38), die elektrisch ansteuerbar ist, mit einem zur Spule (38) fest positionierten Kern (37), der zumindest mit einem Abschnitt gegenüber der Spule (38) hervorsteht und in einer Öffnung (47) des Schenkels (44, 45) des Jochs (39) positioniert ist, und mit einer in der Spule (38) vorgesehenen Stößel (35), der relativ zum Kern (37) bewegbar ist und mit einem Ende durch eine Öffnung (47) in einem der Schenkel (44, 45) des Jochs (39) hindurchführbar ist, mit einem am Stößel (35) angeordneten Schließkörper (33) oder Ventilschließglied (26), und mit einem Rückstell-element (43), welches zwischen dem Kern (37) und dem Stößel (35) angeordnet ist, wobei eine in die Wegerzeugungseinrichtung (21) einsetzbare Schaltbuchse (51) vorgesehen ist, welche einseitig durch einen Boden (53) geschlossen ist und am gegenüberliegenden offenen Ende der Schaltbuchse (51) einen Befestigungsabschnitt (54) aufweist, und die Schaltbuchse (51) einen sich zwischen dem Boden (53) und dem Befestigungsabschnitt (54) erstreckenden Kern-Stößel-Abschnitt (52) mit einer zylindrischen Mantelfläche aufweist, in welchem zumindest der Kern (37) aufgenommen und der Stößel (35) geführt ist, und der dem Boden (53) gegenüberliegende offene Befestigungsabschnitt (54) zumindest eine gegenüber dem Kern-Stößel-Abschnitt (52) nach außen gerichtete, umlaufende Schulter (71) oder einen nach außen gerichteten umlaufenden Bund aufweist. (Hierzu Figur 1)

## Beschreibung

Die Erfindung betrifft ein Schaltventil sowie eine Ventilanordnung zur Regelung eines Schaltventils in einem Kälte- oder Wärmekreislauf mit einem solchen Schaltventil.

Aus der DE 10 2013 107 060 A1 ist eine Ventilanordnung für ein Schaltventil zur Regelung eines Massenstromes in einem Kälte- oder Wärmekreislauf bekannt. Diese Ventilanordnung umfasst ein Ventilgehäuse, welches eine Zuführöffnung und eine Abführöffnung aufweist sowie einen Stößel, an welchem ein Ventilschließglied vorgesehen ist, das in einer Schließposition an einem Ventilsitz einer Durchgangsöffnung, die zwischen der Zuführöffnung und der Abführöffnung vorgesehen ist, anliegt und die Durchgangsbohrung schließt. In einem Ventilgehäuse ist eine Führungsbuchse eingeschraubt, welche ein Ankerrohr umfasst. In diesem Ankerrohr ist ein Stößel auf und ab bewegbar geführt und ein Kern daran fixiert gehalten. Eine Spule einer Wegerzeugungseinrichtung umgibt das Ankerrohr. Die Spule ist wiederum von einem Joch umgeben. Bei dieser Anordnung des Schaltventils ist erforderlich, dass der Kern im Ankerrohr durch eine gasdichte Lötverbindung befestigt wird, wobei diese Lötverbindung derart auszugestalten ist, dass darauffolgend die Wegerzeugungseinrichtung mit der Spule und den die Spule umgebendem Joch auf den Kern und das Ankerrohr aufsetzbar ist.

Der Erfindung liegt die Aufgabe zugrunde, eine Anordnung für ein Schaltventil sowie eine Ventilanordnung mit einem Schaltventil vorzuschlagen, durch welche eine Kostenreduzierung ermöglicht ist.

Diese Aufgabe wird durch ein Schaltventil gelöst, bei welchem eine in die Wegerzeugungseinrichtung einsetzbare Schaltbuchse vorgesehen ist, welche einseitig durch einen Boden geschlossen ist und an einem dem Boden gegenüberliegenden offenen Ende der Schaltbuchse einen Befestigungsabschnitt aufweist und die Schaltbuchse einen Kern-Stößel-Abschnitt aufweist, in welchem der Kern aufgenommen und der Stößel geführt ist. Die Schaltbuchse umfasst an einem Ende den einseitig daran vorgesehenen Boden und am gegenüberliegenden Ende den offenen Befestigungsabschnitt, der gegenüber dem Kern-Stößel-Abschnitt nach außen gerichtet als ein umlaufender Bund oder als eine nach außen gerichtete umlaufende Schulter ausgebildet ist. Diese Ausgestaltung der Schaltbuchse weist den Vorteil auf, dass eine einseitig geschlossene Anordnung geschaffen ist. Eine gasdichte Schweißverbindung oder gasdichte Lötverbindung zwischen dem Kern und der Schaltbuchse nach dem Einsetzen des Stößels ist nicht erforderlich. Durch diese Schaltbuchse kann nach dem Positionieren des Schaltventils zu einem Ventilgehäuse eine nach außen geschlossene Anordnung gegeben sein, welche eine hohe Dichtheit aufweist. Die Schaltbuchse ist zur Anschlussseite offen ausgebildet.

Zudem ist eine einfache Geometrie der Schaltbuchse gegeben, welche zudem in einfacher Weise an einem Ventilgehäuse befestigbar ist.

Die Schaltbuchse erstreckt sich bevorzugt durch eine Öffnung im oberen und unteren Schenkel des Jochs und durch die Spule hindurch. Diese geschlossene Anordnung kann in einfacher Weise in die Wegerzeugungseinrichtung eingesetzt werden. Zudem ist durch diese Ausgestaltung der Schaltbuchse der magnetische Fluss zur schnellen Ansteuerung des Stößels weiterhin aufrechterhalten.

Der Boden der Schaltbuchse ist in einer Öffnung des oberen oder unteren Schenkels des Joches positioniert oder steht gegenüber einer Außenseite des Joches hervor und ist durch ein Befestigungselement zum Joch fixiert. Dabei kann ein Klemmelement, insbesondere ein Sicherungsring, vorgesehen sein, um die Schaltbuchse zum Joch zu fixieren. Des Weiteren kann auch eine Verschraubung oder sonstige Klemmverbindung vorgesehen sein.

Der Kern-Stößel-Abschnitt der Schaltbuchse weist bevorzugt zumindest zwischen dem oberen und dem unteren Schenkel des Joches einen konstanten Durchmesser auf. Dadurch kann der Kern-Stößel-Abschnitt einen Führungsabschnitt für den beweglich aufgenommenen Stößel umfassen. Zudem ist ein einfaches Einsetzen in die Wegerzeugungseinrichtung möglich.

Bevorzugt ist der Kern in der Schaltbuchse mit zumindest einer umlaufenden Sicke in dem Kern-Stößel-Abschnitt fixiert. Dies ermöglicht eine einfache und kostengünstige Fixierung des Kerns in der Schaltbuchse. Eine einseitig geschlossene Anordnung der Schaltbuchse bleibt dadurch weiterhin aufrechterhalten.

Des Weiteren ist bevorzugt vorgesehen, dass die Schaltbuchse einen Befestigungsabschnitt aufweist, bei dem sich an die Schulter zumindest eine radiale Umfangsfläche anschließt. Eine Stirnseite der radialen Umfangsfläche kann als eine Aufstandsfläche in der Anschlussöffnung an dem Ventilgehäuse vorgesehen sein. Des Weiteren kann die radiale Umfangsfläche innerhalb einer Anschlussöffnung des Ventilgehäuses vorgesehen sein und an einer radialen Umfangswand angreifen oder zu dieser beabstandet sein. Des Weiteren kann bevorzugt vorgesehen sein, dass sich an diese radiale Umfangsfläche eine weitere Aufstandsfläche anschließt, welche wiederum radial nach außen weisend ausgerichtet ist. Dadurch kann gegenüber einer Stirnfläche der radialen Umfangsfläche eine vergrößerte Aufstandsfläche gegeben sein. In Abhängigkeit der Geometrie der Anschlussöffnung kann das Dichtungselement innerhalb oder außerhalb des Befestigungsabschnitts der Schaltbuchse angeordnet sein, um die Schnittstelle zwischen der Schaltbuchse und der Anschlussöffnung abzudichten.

Zwischen dem Kern-Stößel-Abschnitt und dem Befestigungsabschnitt der Schaltbuchse kann ein aufgeweiteter Führungsabschnitt zur Aufnahme eines Pilotventils vorgesehen sein. Diese Anordnung ist insbesondere für ein servogesteuertes Schaltventil vorgesehen.

Bevorzugt ist ein Innendurchmesser des aufgeweiteten Führungsabschnitts mit Spiel zum Außenumfang des Pilotventils ausgebildet. Beim Tiefziehen oder Verpressen solcher Schaltbuchsen können bezüglich der Rundheit Toleranzen auftreten. Dennoch ist eine Führung des Pilotventils durch die Bemessung des Innendurchmessers des aufgeweiteten Führungsabschnitts mit einer Spielpassung zum Außenumfang des Pilotventils gegeben.

Zumindest der Boden, der Kern-Stößel-Abschnitt und der Befestigungsabschnitt der Schaltbuchse sind einstückig ausgebildet. Dadurch kann eine geschlossene Anordnung und Dichtheit zu einem Ventilgehäuse ermöglicht sein. Bevorzugt ist die Schaltbuchse als ein Tiefziehteil oder ein Stanzbiegeteil aus einem Stück hergestellt. Solche Tiefziehteile oder Stanzbiegeteile können kostengünstig hergestellt werden. Bevorzugt kann die Schaltbuchse aus Edelstahl ausgebildet sein.

Die der Erfindung zugrundeliegende Aufgabe wird des Weiteren durch eine Ventilanordnung zur Regelung eines Massenstromes in einem Kälte- oder Wärmekreislauf gelöst, bei welchem ein Schaltventil nach einem der vorbeschriebenen Ausführungsformen eingesetzt wird, welches mit einem Befestigungselement der Schaltbuchse zum Ventilgehäuse fixiert ist. Dadurch kann eine einfache Montage und gute Abdichtung gegenüber der Umgebung ermöglicht sein, da durch das Befestigungselement ein Aufnahmebereich oder eine Aufnahmeöffnung am Ventilgehäuse zur Positionierung des Schaltventils in einfacher Weise abgedichtet werden kann.

Bevorzugt ist der Befestigungsabschnitt der Schaltbuchse an oder in einer Anschlussöffnung des Ventilgehäuses positioniert und zumindest ein Dichtelement zwischen einer Anschlussfläche der Anschlussöffnung und dem Befestigungsabschnitt positioniert. Bevorzugt ist eine Ringdichtung, insbesondere O-Ring-Dichtung, vorgesehen, welche zwischen der Anschlussfläche der Anschlussöffnung und dem Befestigungsabschnitt geklemmt gehalten ist.

Vorteilhafterweise ist die Wegerzeugungseinrichtung am Ventilgehäuse durch zumindest ein Verbindungselement, vorzugsweise ein lösbares Verbindungselement, angeschlossen, welches außerhalb der Anschlussstelle an oder im Ventilgehäuse, zu der die Schaltbuchse ausgerichtet ist, angreift. Dadurch ist eine einfache Montage und Fixierung außerhalb der Anschlussstelle von der Schaltbuchse am Ventilgehäuse ermöglicht.

Alternativ kann die Wegerzeugungseinrichtung am Ventilgehäuse durch zumindest ein lösbares Verbindungselement angeschlossen sein, welches zwischen dem Joch der Wegerzeugungseinrichtung und einem Befestigungsabschnitt der Schaltbuchse positioniert ist. Dadurch kann eine integrierte oder innenliegende Befestigung geschaffen sein.

Bei dieser integrierten oder innenliegenden Befestigung ist bevorzugt das Befestigungselement als eine Schraubbuchse oder eine Gewindebuchse vorgesehen, welche in ein Gewinde in der Anschlussöffnung eingreift. Dadurch kann der Befestigungsabschnitt der Schaltbuchse auf eine Anlagefläche in der Anschlussöffnung zubewegt und zu dieser fixiert gehalten werden. Alternativ kann das Befestigungselement als eine Flanschplatte ausgebildet sein, welche zum einen an dem in der Anschlussöffnung positionierten Befestigungsabschnitt der Schaltbuchse angreift und andererseits außerhalb der Anschlussöffnung durch ein lösbares Befestigungselement fixiert ist.

Die Schaltbuchse des Schaltventils kann alternativ in einer Anschlussöffnung einer ersten Hälfte des Ventilgehäuses einsetzbar sein, welche mit einer zweiten Hälfte des Ventilgehäuses zur ersten Hälfte des Ventilgehäuses fixiert ist.

Des Weiteren ist das Schaltventil bevorzugt als ein direkt schaltendes Ventil ausgebildet, bei welchem der Stößel mit dem Ventilschließglied direkt am Ventilsitz in einer Schließposition am Ventilgehäuse anliegt.

Alternativ kann das Schaltventil als ein Servoventil mit einem Pilotventil ausgebildet sein, wobei das Pilotventil zwischen dem Ventilschließglied und dem Stößel angeordnet ist. In Abhängigkeit der Drücke und der Anforderungen können sowohl direkt schaltende Schaltventile als auch als Servoventil ausgebildete Schaltventile eingesetzt werden.

In Abhängigkeit der Anforderungen an den zu regelnden Kälte- oder Wärmekreislauf kann das Schaltventil als ein NC (Normally Closed)-Ventil ausgebildet sein, welches im stromlosen Zustand geschlossen ist oder als ein NO (Normally Open)-Ventil, welches im stromlosen Zustand offen ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht einer ersten Ausführungsform einer Ventilanordnung mit einem servogesteuerten Schaltventil als NC-Ventil,
Figur 2 eine schematische Schnittansicht einer weiteren Ventilanordnung mit einem Schaltventil als direkt schaltendes Ventil als NC-Ventil,
Figur 3 eine schematische Schnittansicht einer alternativen Ausführungsform zu Figur 1,
Figur 4 eine schematische Schnittansicht eines weiteren servogesteuerten Schaltventils als NC-Ventil,
Figur 5 eine schematische Schnittansicht einer weiteren alternativen Ausführungsform eines servogesteuerten Schaltventils als NC-Ventil zu Figur 4,
Figur 6 eine schematische Schnittansicht einer alternativen Ausführungsform des Schaltventils zu Figur 4,
Figur 7 eine schematische Schnittansicht einer weiteren alternativen Ausführungsform zu Figur 4,
Figur 8 eine schematische Schnittansicht einer weiteren alternativen Ausführungsform zu Figur 4,
Figur 9 eine schematische Schnittansicht eines Schaltventils als direkt schaltendes NC-Ventil, und
Figur 10 eine schematische Schnittansicht eines servogesteuerten NO-Ventils, und
Figur 11 eine schematische Schnittansicht einer weiteren alternativen Ausführungsform des Schaltventils als ein NO-Ventil,
Figur 12 eine schematische Schnittansicht einer weiteren alternativen Ausführungsform des Schaltventils als NO-Ventil zu Figur 11, und
Figur 13 eine schematische Schnittansicht einer weiteren alternativen Ausführungsform zu Figur 10.

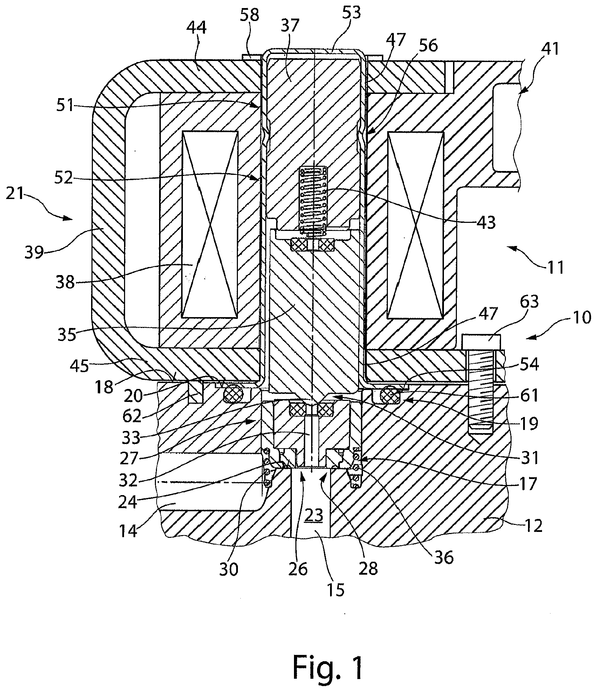

In Figur 1 ist eine schematische Schnittansicht einer ersten Ausführungsform eines Schaltventils 11 dargestellt. Dieses Schaltventil 11 ist an ein Ventilgehäuse 12 angeschlossen und bildet mit diesem eine Ventilanordnung 10. Das Ventilgehäuse 12 umfasst eine Zuführöffnung 14 für einen Massenstrom sowie eine Abführöffnung 15 sowie eine die Zuführöffnung 14 und die Abführöffnung 15 verbindende Kammer 17. Die Zuführöffnung 14 und Abführöffnung 15 weisen jeweils Anschlüsse für Versorgungseinleitungen oder weitere Komponenten auf, um diese Ventilanordnung 10 in einen Kältekreislauf oder Wärmekreislauf einzubinden.

Die Kammer 17 ist Teil einer Anschlussöffnung 19 am Ventilgehäuse 12, welche zu einer Gehäuseseite 18 hin offen ausgebildet ist. Die Kammer 17 geht in eine Durchgangsbohrung 23 über, welche von einem Ventilsitz 24 umgeben ist. Dieses Schaltventil 11 ist als ein Servoventil ausgebildet. Dieses Servoventil umfasst einen Ventilkolben 27 mit einem Ventilschließglied 26, der in einer Schließposition 28 an dem Ventilsitz 24 anliegt. Der Ventilkolben 27 ist in der Anschlussöffnung 19 des Ventilgehäuses 12 geführt. Dem Ventilschließglied 26 gegenüberliegend weist der Ventilkolben 27 eine Pilotbohrung 32 auf, welche mit an einem Stößel 35 angeordneten Schließkörper 33 verschließbar ist. Die Pilotbohrung 32 und der Schließkörper 33 bilden das Pilotventil 31. Eine Wegerzeugungseinrichtung 21 ist lösbar am Ventilgehäuse 12 befestigt und zur Anschlussöffnung 19 ausgerichtet. Die Wegerzeugungseinrichtung 21 umfasst eine Spule 38, welche in ein Joch 39 eingebunden ist. Dieses Joch 39 umfasst einen oberen und unteren Schenkel 44, 45, in welchem jeweils eine Öffnung 47 vorgesehen ist, welche dem inneren Durchgang der Spule 38 entspricht. Die Spule 38 und das Joch 39 sind miteinander verbunden oder gemeinsam in einem Gehäuse angeordnet. Dieses Gehäuse kann auch ein Spritzgussteil sein, welches die Spule 38 und das Joch 39 umgibt. Die Wegerzeugungseinrichtung 21 ist über einen elektrischen Anschluss 41 ansteuerbar. In die Wegerzeugungseinrichtung 21 ist eine Schaltbuchse 51 einsetzbar. Diese Schaltbuchse 51 umfasst einen Kern-Stößel-Abschnitt 52, der eine vorzugsweise zumindest abschnittsweise ausgebildete zylindrische Mantelfläche umfasst. An einem Ende der Schaltbuchse 51 ist ein Boden 53 vorgesehen, durch welchen die Schaltbuchse 51 einseitig geschlossen ist. Dem Boden 53 gegenüberliegend weist die Schaltbuchse 51 einen offenen Befestigungsabschnitt 54 auf, vorzugsweise ist dieser Befestigungsabschnitt 54 als eine umlaufende Schulter oder als ein umlaufender Bund ausgebildet, der gegenüber dem Kern-Stößel-Abschnitt 52 nach außen gerichtet ist.

Diese Schaltbuchse 51 ist einstückig ausgebildet. Insbesondere ist diese Schaltbuchse 51 als ein Tiefziehteil oder Stanzbiegeteil aus einem Rohling hergestellt. In dem Kern-Stößel-Abschnitt 52 ist ein Kern 37 eingesetzt. Dieser Kern 37 ist bevorzugt durch mindestens eine umlaufende Sicke 56 in der Schaltbuchse 51 fixiert. Der Kern 37 weist hierfür zumindest eine umlaufende Vertiefung auf, sodass die umlaufende Sicke 56 in die Vertiefung des Kerns 37 eingreifen kann. Dadurch ist der Kern 37 in einfacher Weise innerhalb der Schaltbuchse 51 fixiert. In der Schaltbuchse 51 ist des Weiteren der Stößel 35 bewegbar geführt. Zwischen dem Stößel 35 und dem Kern 37 ist ein Rückstellelement 43 vorgesehen. An einem dem Kern 37 gegenüberliegenden Ende des Stößels 35 ist der Schließkörper 33 vorgesehen, der an der Pilotbohrung 32 zur Bildung des Pilotventils 31 angreift.

Die Schaltbuchse 51 weist eine Länge auf, sodass der Kern-Stößel-Abschnitt 52 sich zumindest durch die Öffnung 47 des oberen und unteren Schenkels 44, 45 des Jochs 39 erstreckt. Vorzugsweise ist ein Abschnitt der Schaltbuchse 51 gegenüber dem oberen Schenkel 44 des Jochs 39 herausragend positioniert, sodass die Schaltbuchse 51 durch ein Sicherungselement 58 zur Wegerzeugungseinrichtung 21 fixiert gehalten werden kann.

Die Anschlussöffnung 19 des Ventilgehäuses 12 umfasst zumindest eine Anschlussfläche 20, der ein Dichtungselement 61 zugeordnet ist oder welche beispielsweise eine Anlagefläche und eine umlaufende Vertiefung umfasst, wobei das Dichtungselement 61 in der umlaufenden Vertiefung positionierbar ist. Der Befestigungsabschnitt 54 der Schaltbuchse 51 liegt an der Anschlussfläche 20 der Anschlussöffnung 19 nach dem Anschließen der Wegerzeugungseinrichtung 21 an dem Ventilgehäuse 12 an. Dadurch kann eine Abdichtung der Kammer 17 gegenüber der äußeren Umgebung erzielt werden. Durch die einstückig ausgebildete Schaltbuchse 51 genügt diese eine Dichtung 61, um eine Schnittstelle zwischen der Wegerzeugungseinrichtung 21 und dem Ventilgehäuse 12 abzudichten. Die Wegerzeugungseinrichtung 21 weist am Joch 39 oder an einem Gehäuse der Wegerzeugungseinrichtung 21 einen Befestigungsabschnitt 54 auf, sodass über ein lösbares Befestigungselement 63, wie beispielsweise eine Schraube, ein Clip oder eine Niete, die Wegerzeugungseinrichtung 21 zum Ventilgehäuse 12 fixiert sein kann. Zusätzlich zum Befestigungselement 63 kann auch eine Verdrehsicherung 62 an der Wegerzeugungseinrichtung 21 oder dem Ventilgehäuse 12 vorgesehen sein, welches während der Montage eine Ausrichtung ermöglicht und diese aufrechterhält.

Das in Figur 1 dargestellte Schaltventil 11 ist ein sogenanntes NC-Ventil (Normally Closed)-Ventil, das heißt, dass bei einer nicht bestromten Spule 38 das Schaltventil 11 geschlossen und ein Durchgang zwischen der Zuführöffnung und der Abführöffnung 14, 15 gesperrt ist. Bei einem solchen Schaltventil 11 kommt beispielsweise eine monostabile Wegerzeugungseinrichtung 21 zum Einsatz, die nur eine Position des Stößels 35 in einer Öffnungsposition hält, solange die Spule 38 bestromt ist.

Bei diesem Schaltventil 11 ist der Ventilkolben 27 in der Kammer 17 des Ventilgehäuses 12 geführt. Zwischen dem Ventilkolben 27 und einer Durchgangsbohrung 23 ist eine Pilotventilfeder 30 vorgesehen, die nach der Ansteuerung des Stößels 35 in einer Öffnungsposition eine Öffnungsbewegung des Ventilkolbens 27 unterstützt.

Bei dieser Ausführungsform des Schaltventils 11 gemäß Figur 1 weist somit die Schaltbuchse 51 eine Längserstreckung auf, sodass darin der Kern 37 aufgenommen und nur der Stößel 35 bewegbar geführt ist.

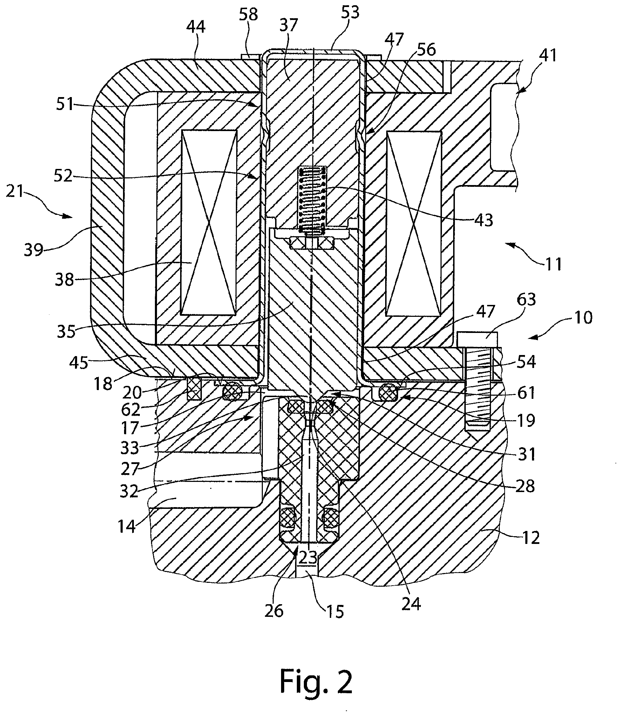

In Figur 2 ist eine alternative Ausführungsform des Schaltventils 11 zu Figur 1 dargestellt. Diese Ausführungsform gemäß Figur 2 weicht dahingehend von der Ausführungsform in Figur 1 ab, dass ein direkt schaltendes Schaltventil 11 ausgebildet ist. Bei der Ausführungsform gemäß Figur 2 ist kein bewegbares Pilotventil 31 vorgesehen. Vielmehr ist der Ventilkolben 27 fest im Ventilgehäuse 12 angeordnet, und an dem Stößel 35 ist unmittelbar das Ventilschließglied 26 vorgesehen, welches in der Schließposition 28 an dem Ventilsitz 24 anliegt und die Durchgangsbohrung 23 schließt.

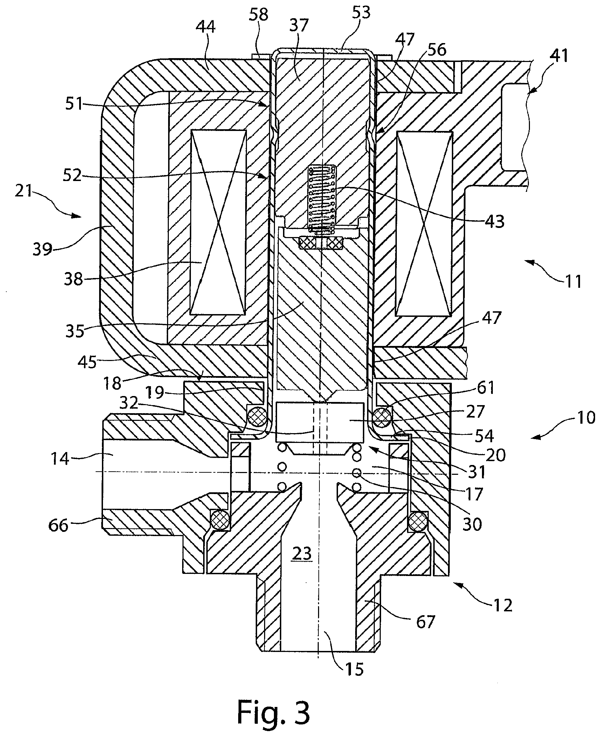

In Figur 3 ist eine alternative Ausführungsform des Schaltventils 11 zu Figur 1 dargestellt. Das Schaltventil 11 ist wiederum als ein NC-Ventil mit einem Pilotventil 31 ausgebildet. Dieses Schaltventil 11 gemäß Figur 3 ist in einer geöffneten Position dargestellt. Bei dieser Ausführungsform erstreckt sich der Kern-Stößel-Abschnitt 52 in die Anschlussöffnung 19 des Ventilgehäuses 12 hinein, sodass in dem Kern-Stößel-Abschnitt 52 der Kern 37 fixiert ist, der Stößel 35 bewegbar geführt ist und zusätzlich noch der Ventilkolben 27 des Pilotventils 31 geführt ist. Somit ist die Führung des Ventilkörpers 27 von der Kammer 17 im Ventilgehäuse 12 gemäß Figur 1 in den Kern-Stößel-Abschnitt 52 der Schaltbuchse 51 verlagert.

Bei dieser Ausführungsform gemäß Figur 3 ist das Ventilgehäuse 12 zweiteilig ausgebildet. Dadurch kann die Schaltbuchse 51 in die Anschlussöffnung 19 der ersten Gehäusehälfte 66 einsetzbar sein, wobei zwischen einem Außenumfang des Kern-Stößel-Abschnitts 52 und einer Anschlussfläche 20 in der Anschlussöffnung 19 das Dichtelement 61 vorgesehen ist. Alternativ kann das Dichtungselement 61 auch an einer Außenseite des Befestigungsabschnitts 54 und an einer Anschlussfläche 20 in der Anschlussöffnung 19 angreifen. Der Zusammenbau des Schaltventils 11 und des Ventilgehäuses 12 erfolgt durch eine Überkopfmontage. Nach dem Einsetzen der Schaltbuchse 51 in die Anschlussöffnung 19 der ersten Gehäusehälfte 66 werden das Rückstellelement 43, der Stößel 35 und der Ventilkolben 27 in die Schaltbuchse 51 eingesetzt und anschließend die Pilotventilfeder 30 am Ventilkolben 27 aufgesetzt. Danach wird die zweite Gehäusehälfte 67 unter Zwischenschaltung eines weiteren Dichtelementes 61 eingeschraubt und fixiert. Diese Ausführungsform des Ventilgehäuses 12 kann beispielsweise zur Ausbildung eines 90°-Eckventils vorgesehen sein.

Die Wegerzeugungseinrichtung 21 kann in Analogie wie in Figur 1 beschrieben an der ersten Gehäusehälfte 66 des Ventilgehäuses 12 befestigbar sein.

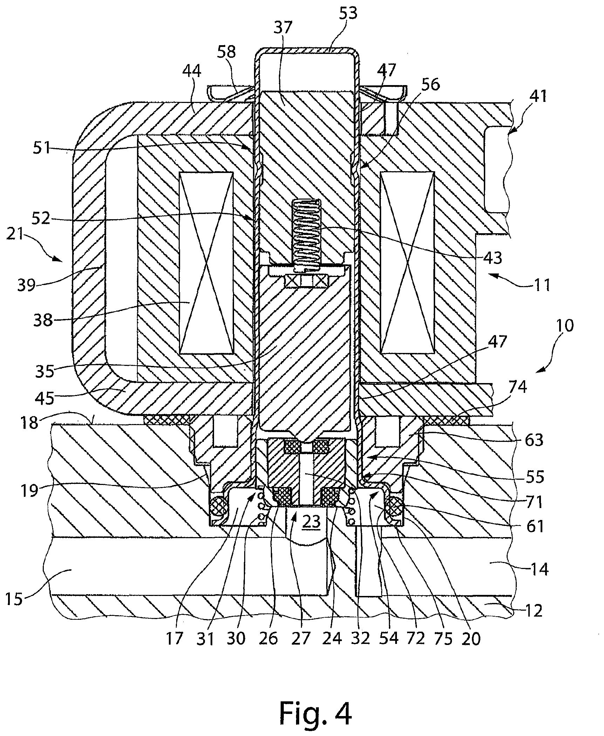

In Figur 4 ist eine schematische Schnittansicht einer alternativen Ausführungsform des Schaltventils 11 für eine Ventilanordnung 10 zu Figur 1 dargestellt. Bei dieser Ausführungsform ist die Schaltbuchse 51 abweichend zur Ausführungsform gemäß Figur 1 ausgebildet. Die Schaltbuchse 51 umfasst zwischen dem Kern-Stößel-Abschnitt 52 und dem Befestigungsabschnitt 54 den Führungsabschnitt 55, der im Durchmesser bevorzugt größer als der Kern-Stößel-Abschnitt 52 ausgebildet ist. In diesem Führungsabschnitt 55 wird der Ventilkolben 27 geführt. Der sich an den Führungsabschnitt 55 anschließende Befestigungsabschnitt 54 ist bevorzugt gestuft ausgebildet. Eine erste Schulter 71 des Befestigungsabschnitts 54 dient als eine Niederhaltefläche, durch welche die Schaltbuchse 51 mittels dem Befestigungselement 63 in der Anschlussöffnung 19 des Ventilgehäuses 12 fixiert gehalten ist. Bevorzugt ist das Befestigungselement 63 auf dem Führungsabschnitt 55 aufgepresst. Dabei wird bevorzugt eine Stirnseite des Befestigungselementes 63 zur Schulter 71 anliegend positioniert. Zumindest durch das Aufpressen des Befestigungselements 63 auf den Führungsabschnitt 55 kann ein Toleranzausgleich bezüglich der Rundheit bzw. Zylindrizität des Führungsabschnitts 55 zum Pilotventil 31 erzielt werden. Vorteilhafterweise kann eine radiale Abstandsdifferenz zwischen dem Führungsabschnitt 55 und den Ventilkolben 27 erzielt werden, die gleich oder kleiner ist als das 0,1-fache des Radius von dem Führungsdurchmesser 55. Das Befestigungselement 63 weist ein Außengewinde auf, welches an einem Innengewinde in der Anschlussöffnung 19 angreift. Ergänzend ist zur Schulter 71 weisend ein Ringbund an dem Befestigungselement 63 vorgesehen. Zwischen einer radialen Umfangsfläche 72 des Befestigungsabschnitts 54, der sich an die Schulter 71 anschließt und vorzugsweise um 90° abgewinkelt ist, und einer zylindrischen Anlagefläche 20 der Auslassöffnung 19 ist das Dichtungselement 61 vorgesehen. Dieses Dichtungselement 61 kann zusätzlich noch durch das Befestigungselement 63 niedergehalten werden und zu dem umlaufenden Bund, der radial nach außen ausgerichtet ist, fixiert gehalten sein.

An der radialen Umfangsfläche 72 kann zusätzlich noch eine Aufstandsfläche 75 der Schaltbuche 51 vorgesehen sein, welche vorzugsweise radial nach außen weisend und insbesondere um 90° abgekantet ist. Durch das Befestigungselement 63 kann die Schaltbuchse 51 in radialer Richtung zum Ventilgehäuse 12 fixiert werden, indem dieses an der Schulter 71 des Befestigungsabschnitts 54 angreift und die Aufstandsfläche 75 zur Anlage in der Anschlussöffnung 20 bringt. Diese Anschlussöffnung 20 wird in radialer Richtung abgedichtet.

Zur Montage der Wegerzeugungseinrichtung 21 zum Ventilgehäuse 12 werden das Rückstellelement 43 und darauffolgend der Stößel 35 in die Schaltbuchse 51 eingesetzt. Ergänzend wird der Ventilkolben 27 in die Schaltbuchse 51 eingesetzt. Eine Pilotventilfeder 30 wird in die Kammer 17 eingesetzt. Darauffolgend wird die Schaltbuchse 51 mit dem Befestigungsabschnitt 54 in der Anschlussöffnung 19 positioniert. Davor oder danach kann das Dichtungselement 61 auf die radiale Umfangsfläche 72 der Schaltbuchse 51 aufgesetzt werden. Darauffolgend wird das Befestigungselement 63 über die Schaltbuchse 51 gestülpt sowie zur Anschlussöffnung 19 positioniert und darauffolgend fixiert. Im Anschluss daran kann ein Dämpfungselement 74, insbesondere ein Gummiplatte oder eine Gummischeibe, auf die Außenseite 18 des Ventilgehäuses 12 aufgelegt werden. Dieses Dämpfungselement 74 kann auch das Verdrehsicherungselement bilden. Danach wird die Wegerzeugungseinrichtung 21 auf die Schaltbuchse 51 aufgesetzt und zur Gehäuseseite 18 positioniert. Über ein Sicherungselement 58 kann die Wegerzeugungseinrichtung 21 zu der Schaltbuchse 51 fixiert gehalten sein. In dieser Position kann das Dämpfungselement 74 auch als eine Verdrehsicherung dienen. Alternativ kann ein Sicherungselement 62 in Analogie zu Figur 1 vorgesehen sein.

Das Schaltventil 11 gemäß Figur 4 ist ein NC-Ventil mit einem Pilotventil 31.

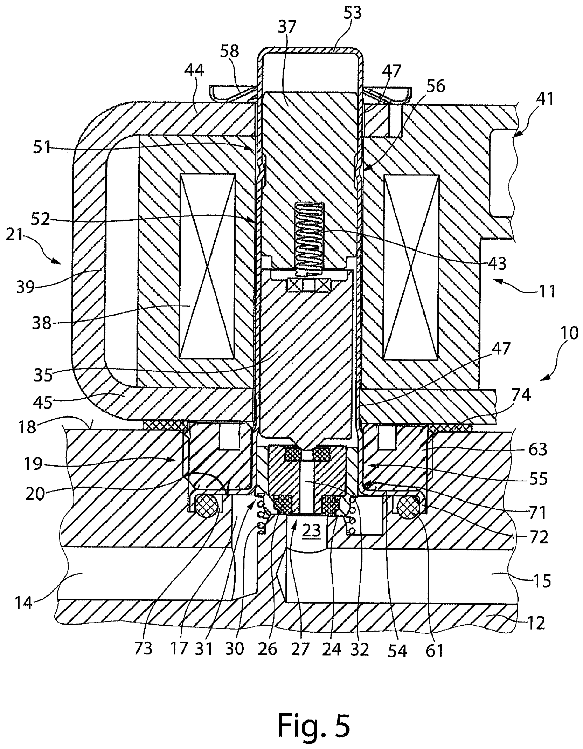

In Figur 5 ist eine schematische Schnittansicht einer weiteren alternativen Ausführungsform des Schaltventils 11 für eine Ventilanordnung 10 zu Figur 4 dargestellt. Der Aufbau der Wegerzeugungseinrichtung 21 entspricht dem Aufbau gemäß Figur 4, so dass darauf Bezug genommen werden kann.

Die Schaltbuchse 51 umfasst zwischen dem Kern-Stößel-Abschnitt 52 und dem Befestigungsabschnitt 54 den Führungsabschnitt 55, der im Durchmesser größer als der Kern-Stößel-Abschnitt 52 ausgebildet ist. In diesem Führungsabschnitt 55 wird der Ventilkolben 27 geführt. Der sich an den Führungsabschnitt 55 anschließende Befestigungsabschnitt 54 ist bevorzugt gestuft ausgebildet. Der Befestigungsabschnitt 54 umfasst eine erste Schulter 71. Diese Schulter 71 dient als eine Niederhaltefläche, durch welche die Schaltbuchse 51 mittels des Befestigungselements 63 in der Anschlussöffnung 19 des Ventilgehäuses 12 fixiert gehalten ist. Das Befestigungselement 63 weist ein Außengewinde auf, welches an einem Innengewinde der Anschlussöffnung 19 angreift. Durch das Befestigungselement 63 wird die Schulter 71 des Befestigungsabschnitts 54 zu einer Anlagefläche 20 in der Anschlussöffnung 19 fixiert gehalten. Diese Anlagefläche 20 ist als Ringbund ausgebildet. Radial außerhalb der Anlagefläche 20 ist eine umlaufende Vertiefung in Form einer Nut 73 ausgebildet. In dieser Nut 73 ist ein Dichtungselement 61 vorgesehen. Zwischen der Schulter 71 und der Nut 73 wird das Dichtungselement 61 durch den Befestigungsabschnitt 54 geklemmt gehalten.

Der Befestigungsabschnitt 54 weist des Weiteren an die Schulter 71 angrenzend eine radiale Umfangsfläche 72 auf. Diese radial Umfangsfläche 72 kann sich mit deren Stirnseite in der Nut 73 abstützen. Diese radiale Umfangsfläche 72 nimmt das Dichtungselement 61 auf. Das Dichtungselement 61 ist durch die Schulter 71 und die radial Umfangsfläche 72 des Befestigungsabschnitts 54 in der Nut 73 fixiert gehalten.

Der Durchmesser der Durchgangsöffnung des Befestigungselementes 63 ist an den Außenumfang des Führungsabschnitts 55 angepasst, so dass der Führungsabschnitt 55 in der Durchgangsöffnung des Befestigungselementes 63 einsetzbar ist und vorzugsweise dazwischen keine Klemmwirkung oder kein Presssitz erzielt wird.

Zur Montage der Ventilanordnung 10 ist vorgesehen, dass nach dem Herstellen der Schaltbuchse 51 der Kern 37 in die Schaltbuchse 51 eingesetzt und durch die umlaufende Sicke 56 fixiert wird. Darauffolgend werden das Rückstellelement 43 und der Stößel 35 in die Schaltbuchse 51 eingesetzt. Die Öffnung der Schaltbuchse 51 ist dabei nach oben weisend ausgerichtet. Ergänzend wird der Ventilkolben 27 in die Schaltbuchse 51 eingesetzt. Darauffolgend wird die Pilotfeder 30 zum Ventilkolben 27 positioniert. Anschließend wird das Dichtungselement 61 auf eine Innenseite des Befestigungsabschnitts 54 aufgelegt. Darauffolgend wird das Ventilgehäuse 12 auf das Dichtungselement 61 und den Ventilkolben 27 aufliegend unter Zwischenschaltung der Pilotventilfeder 30 positioniert. In einem darauffolgenden Schritt wird das Befestigungselement 63 über die Schaltbuchse 51 gestülpt und zur Anschlussöffnung 19 im Ventilgehäuse 12 positioniert und fixiert. Darauffolgend kann diese vormontierte Anordnung, bestehend aus der Schaltbuchse 51 und dem Ventilgehäuse 12, um 180° gedreht werden, so dass darauffolgend, sofern erforderlich, von oben das Dämpfungselement 74 auf die Außenseite 18 des Ventilgehäuses 12 aufgelegt wird. Nachfolgend kann die Wegerzeugungseinrichtung 21 auf die Schaltbuchse 51 aufgesetzt und durch das Sicherungselement 58 zur Schaltbuchse 51 fixiert gehalten werden. Alternativ zum Sicherungselement 58 kann die Wegerzeugungseinrichtung 21 mit dem lösbaren Befestigungselement 63, welches bevorzugt in eine Öffnung im Joch 39 einsetzbar ist, zum Ventilgehäuse 12 fixiert werden. Das Sicherungselement 58 kann entfallen, und der Überstand des Bodens 53 der Schaltbuchse 51 am oberen Schenkel 44 des Jochs 39 kann reduziert oder eliminiert werden. Bei dieser Anordnung kann das Dämpfungselement 74 auch als eine Verdrehsicherung dienen. Alternativ kann ein Sicherungselement 62 in Analogie zu Figur 1 vorgesehen sein.

Das Schaltventil 11 gemäß Figur 5 ist ein NC-Ventil mit einem Pilotventil.

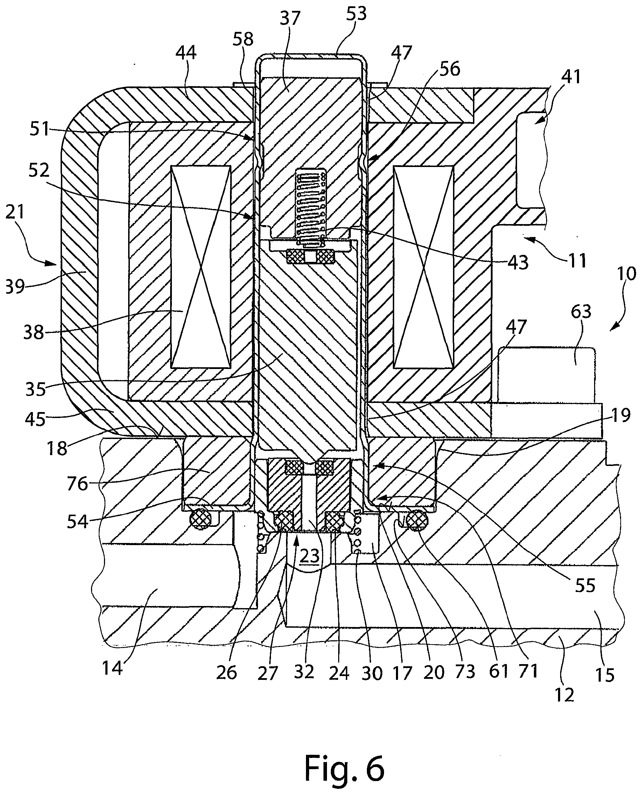

In Figur 6 ist eine alternative Ausführungsform der Ventilanordnung 10 zu Figur 4 dargestellt. Bei dieser Ausführungsform umfasst die Schaltbuchse 51 den Kern-Stößel-Abschnitt 52 sowie den Führungsabschnitt 55 für den Ventilkolben 27 des Pilotventils 31. Der Befestigungsabschnitt 54 schließt sich an den Führungsabschnitt 55 an und ist als umlaufender Bund ausgebildet, der um 90° gegenüber einer Längsachse der Schaltbuchse 51 nach außen gewinkelt ist. Die Anschlussfläche 20 in der Anschlussöffnung 19 ist radial zur Längsachse der Schaltbuchse 51 beziehungsweise zur Längsachse der Durchgangsbohrung 23 ausgerichtet. In der Anschlussfläche 20 ist eine umlaufende Nut 73 zur Aufnahme des Dichtungselementes 61. Die Schaltbuchse 41 wird in Analogie zu Figur 4 in einer Überkopfanordnung mit dem Stellelement 43, dem Stößel 35, dem Ventilkolben 27 und darauffolgend der Pilotventilfeder 30 bestückt. Anschließend wird auf den Befestigungsabschnitt 54 das Dichtungselement 61 aufgelegt und das Ventilgehäuse mit der Anschlussfläche 20 zur Schaltbuchse 51 positioniert. Danach wird diese vormontierte Anordnung um 180° gedreht, sodass die Schaltbuchse nach obenstehend angeordnet ist, wie dies in Figur 5 dargestellt ist. Anschließend wird ein Distanzring 76 in der Anschlussöffnung 20 positioniert, welche auf dem Befestigungsabschnitt 54 aufliegt. Im Anschluss daran wird die Wegerzeugungseinrichtung 21 auf die Schaltbuchse 51 aufgesetzt, sodass ein unterer Schenkel 45 des Jochs 39 auf dem Distanzring 76 aufliegt. An dem unteren Schenkel 45 des Jochs 39 sind entfernt zueinander Befestigungselemente 63 gegeben, welche lösbar mit dem Ventilgehäuse 12 verbunden sind. Dadurch kann die Wegerzeugungseinrichtung 21 zur Gehäuseseite 18 des Ventilgehäuses 12 fixiert gehalten werden, wobei beim Befestigen des Befestigungselementes 63 eine Spann- oder Klemmwirkung über den Befestigungsabschnitt 54 der Schaltbuchse 51 auf die Dichtung 61 erfolgt, um die Schnittstelle zwischen dem Ventilgehäuse 12 und an dem Schaltventil 11 abzudichten.

Bei diesem Schaltventil 11 handelt es sich um ein NC-Ventil mit einem Pilotventil.

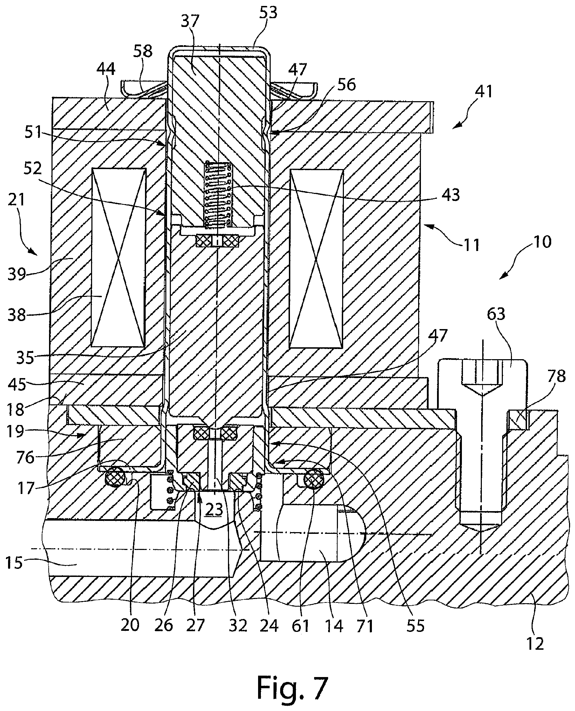

In Figur 7 ist eine alternative Ausführungsform zur Befestigung des Schaltventils 11 am Ventilgehäuse 12 für eine Ventilanordnung 10 zu Figur 6 dargestellt. Diese Ausführungsform gemäß Figur 7 umfasst eine Schaltbuchse 51, welche der in Figur 6 entspricht. Auch die Anordnung des Dichtelementes 61 entspricht der Ausführungsform gemäß Figur 6. Bei der Ausführungsform gemäß Figur 7 erfolgt abweichend zu Figur 6 über einen Flansch 78 die Befestigung der Schaltbuchse 51 zur Anschlussöffnung 19 im Ventilgehäuse 12. Dieser Flansch 78 kann als Flanschplatte ausgebildet sein, welche durch lösbare Verbindungselemente 63 zur Gehäuseseite 18 des Ventilgehäuses 12 befestigbar ist. Der Flansch 78 kann einen zuvor auf die Schaltbuchse 51 aufgesetzten Distanzring 76 niederhalten. Alternativ kann der Distanzring 76 und der Flansch 78 aus einem Teil bestehen. Aufgrund der Befestigung der Schaltbuchse 51 über den Flansch 78 kann das Joch 39 der Wegerzeugungseinrichtung 21 ohne einen Befestigungsabschnitt ausgebildet sein.

Das Schaltventil 11 gemäß Figur 7 ist ein NC-Ventil mit einem Pilotventil.

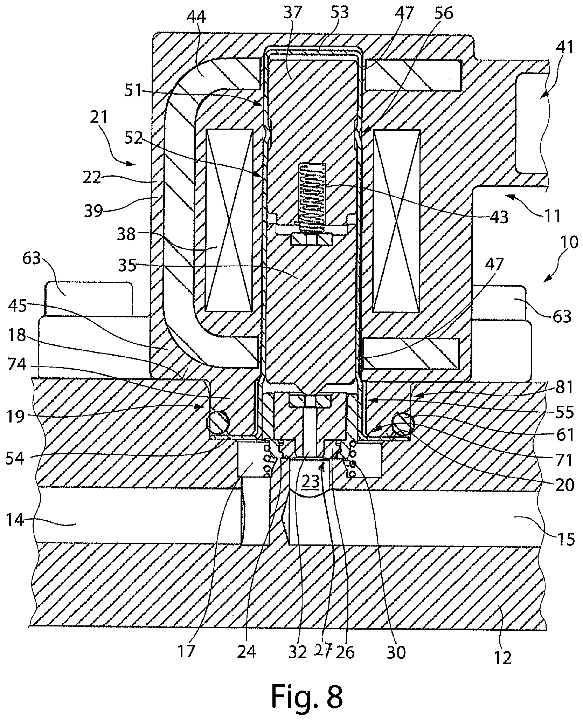

In Figur 8 ist eine weitere alternative Ausführungsform des Schaltventils 11 für eine Ventilanordnung 10 zu Figur 6 dargestellt. Bei dieser Ausführungsform gemäß Figur 8 entspricht die Ausgestaltung der Schaltbuchse 51 der Ausführungsform gemäß Figur 6. Abweichend ist die Wegerzeugungseinrichtung 21 zu der in Figur 6 ausgebildet. Bei dieser Ausführungsform der Wegerzeugungseinrichtung 21 sind die Spule 38 und das Joch 39 in einem Gehäuse 22 eingebunden. Insbesondere ist das Gehäuse 22 durch eine Umspritzung der Spule 38 und des Jochs 39 hergestellt. Das Gehäuse 22 der Wegerzeugungseinrichtung 21 umfasst einen Anschlussabschnitt 81, der in die Anschlussöffnung 19 des Ventilgehäuses 12 einsetzbar ist. Zwischen dem Anschlussabschnitt 81 und dem Befestigungsabschnitt 54 der Schaltbuchse 51 ist das Dichtungselement 61 positioniert. Der Anschlussabschnitt 81 umfasst einen Ringbund, durch welchen das Dichtelement 61 zum einen in Richtung auf den Befestigungsabschnitt 54 der Schaltbuchse 51 und zum anderen auf die zylindrische Anschlussfläche 20 in der Anschlussöffnung 19 niedergehalten ist. An dem Gehäuse 22 der Wegerzeugungseinrichtung 21 ist ein Befestigungsabschnitt 54 vorgesehen, durch welchen das zumindest eine Befestigungselement 63 lösbar mit dem Ventilgehäuse 12 verbunden ist. Die Fixierung und abdichtende Anordnung erfolgt durch die Fixierung des Gehäuses 22 zum Ventilgehäuse 12 über die lösbaren Verbindungselemente 63.

Dieses Schaltventil 11 ist als ein NC-Ventil mit einem Pilotventil 31 ausgebildet.

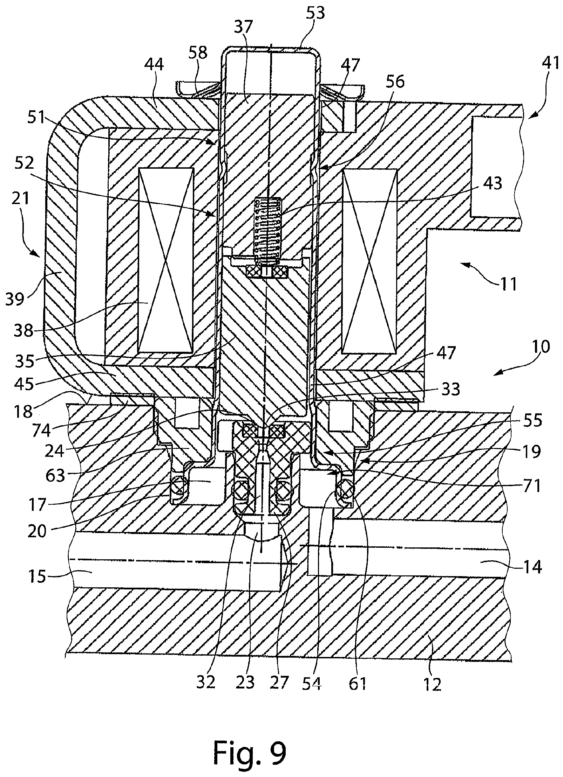

In Figur 9 ist eine schematische Schnittansicht einer alternativen Ausführungsform des Schaltventils 11 zu Figur 4 dargestellt. Diese Ausführungsform weicht von der Figur 4 dahingehend ab, dass das Schaltventil 11 anstelle eines NC-Ventils mit einem Pilotventil 31 nunmehr als ein direkt geschaltetes NC-Ventil ausgebildet ist. Bei dieser Ausführungsform ist der Ventilkolben 27 fest mit dem Ventilgehäuse 12 verbunden. Dadurch wird durch den Stößel 35 ausschließlich ein Öffnen und Schließen der Durchgangsbohrung 23 angesteuert, welche vorzugsweise der Pilotbohrung 32 entspricht.

Die Ausgestaltung der Schaltbuchse 51 als auch deren Befestigung sowie die Montage der Wegerzeugungseinrichtung 21 entspricht der Ausführungsform gemäß Figur 4.

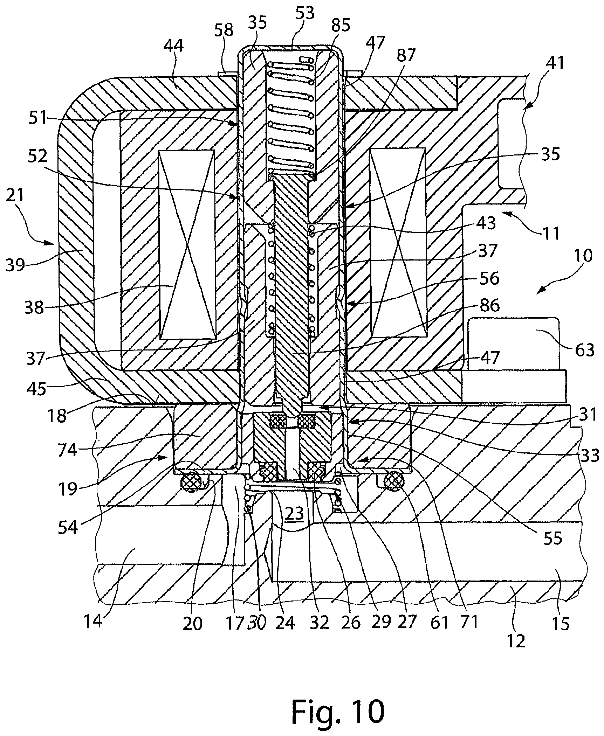

In Figur 10 ist eine weitere alternative Ausführungsform des Schaltventils zu Figur 6 dargestellt. Bei dieser Ausführungsform gemäß Figur 10 ist das Schaltventil 11 als ein NO-Ventil mit einem Pilotventil 31 ausgebildet. Bei einem solchen NO-Ventil sind die Anordnung und der Aufbau von dem Kern 37 und der Spule 38 abweichend zu der Anordnung gemäß dem NC-Ventil in Figur 6.

Der Kern 37 ist an den Führungsabschnitt 55 angrenzend und in dem Kern-Stößel-Abschnitt 52 positioniert und wiederum durch eine umlaufende Sicke 56 in dem Kern-Stößel-Abschnitt 52 fixiert. Zwischen dem Kern 37 und dem Boden 53 der Schaltbuchse 51 ist der Stößel 35 bewegbar geführt. Dieser Stößel 35 kann einen Schließkörper 33 aufweisen, der sich durch den Kern 37 hindurch erstreckt und die Pilotbohrung 32 bei einer Ansteuerung der Wegerzeugungseinrichtung 21 schließt. Sofern die Wegerzeugungseinrichtung 21 nicht bestromt ist, wird der Stößel 35 in einer abgehobenen Position beziehungsweise in einer Öffnungsposition zum Pilotventil 31 angeordnet, sodass die Pilotbohrung 32 geöffnet ist.

Im Ausführungsbeispiel ist der Stößel 35 zweiteilig ausgebildet und umfasst einen bewegbaren Stößelkörper 84 und einen Führungsstift 86, der in dem bewegbaren Stößelkörper 84 verschiebbar gelagert ist. Innerhalb des bewegbaren Stößelkörpers 84 ist eine Dämpfungsfeder 85 gelagert, welche auf den Führungsstift 86 wirkt, der in dem bewegbaren Stößelkörper 84 verschiebbar gelagert ist. Bei einer Bestromung der Wegerzeugungseinrichtung 21 wird der bewegbare Stößelkörper 84 des Stößels 35 auf den Kern 37 zubewegt. Sobald der Führungsstift 86 auf der Pilotbohrung 32 aufliegt, kann bei einer weiteren Antriebsbewegung des bewegbaren Stößelkörpers 84 auf den Kern 37 zu eine Entkopplung zwischen dem bewegbaren Stößelkörper 84 und dem Führungsstift 86 erfolgen. An einem im Stößel 35 liegenden Ende des Führungsstiftes 86 ist eine Mitnahmeschulter 87 vorgesehen, durch welche der Führungsstift 86 in eine Öffnungsposition 29 übergeführt wird, sofern die Wegerzeugungseinrichtung 21 stromlos geschalten ist, da das Rückstellelement 43 den Stößel 35 in eine Öffnungsposition 29 überführt.

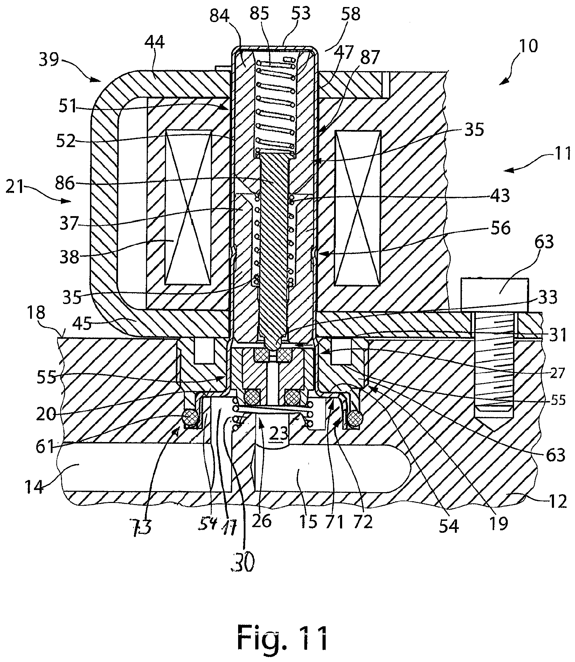

In Figur 11 ist eine weitere alternative Ausführungsform eines Schaltventils 11 als ein NO-Ventil mit einem Pilotventil 31 dargestellt. Die Funktionsweise und der Aufbau des Schaltventils 11 gemäß dieser Form entspricht der Ausführungsform gemäß Figur 10. Darauf wird unmittelbar Bezug genommen.

Bei dieser Ausführungsform gemäß Figur 11 ist die Ausgestaltung der Schaltbuchse 51 und die Fixierung des Schaltventils 11 zum Ventilgehäuse 12 abweichend zur Ausführungsform in Figur 10.

Das Schaltventil 11 umfasst die Schaltbuchse 51, den Kern-Stößel-Abschnitt 52 sowie dem Boden 53 gegenüberliegend den Führungsabschnitt 55. Dieser Führungsabschnitt 55 ist im Durchmesser gegenüber dem Kern-Stößel-Abschnitt 52 vergrößert. An diesen Führungsabschnitt 55 schließt sich dem Boden 53 gegenüberliegend der Befestigungsabschnitt 54 an, an welchen sich zur offenen Seite der Schaltbuchse 51 hin eine Schulter 71 und darauffolgend eine radiale Umfangsfläche 72 erstreckt.

Die Anschlussöffnung 19 im Ventilgehäuse 12 umfasst eine Anschlussfläche 20, auf welche der Befestigungsabschnitt 54 aufliegt. Die Anschlussfläche 20 weist eine umlaufende Nut 73 auf, die radial außen umlaufend zur Anlagefläche 20 vorgesehen ist. Der Befestigungsabschnitt 54 der Schaltbuchse 51 erstreckt sich in die radiale Umfangsfläche 72 der Schaltbuchse 51. In dieser radial umlaufenden Nut 73 ist des Weiteren das Dichtungselement 61 vorgesehen, welches einerseits an einer äußeren Umfangsfläche der Nut 73 angreift und andererseits an einer äußeren Umfangsfläche der radialen Umfangsfläche 72 des Befestigungsabschnitts 54 anliegt. Das lösbare Verbindungselement 63 ist in die Anschlussöffnung 19 eingeschraubt, so dass die Schaltbuchse 51 über dem Befestigungsabschnitt 54 im Ventilgehäuse 12 fixiert gehalten ist. Eine radiale Abdichtung zwischen der Ventilanordnung 11 und dem Ventilgehäuse 12 findet für das Dichtelement 61 in der umlaufenden Nut 73 statt.

Die Wegerzeugungseinrichtung 21 kann über ein weiteres lösbares Befestigungselement 63 mit dem Ventilgehäuse 12 fixiert sein, welches vorzugsweise an dem Joch 39 der Wegerzeugungseinrichtung 21 angreift. Alternativ kann das Sicherungselement 58 die Wegerzeugungseinrichtung 21 zur Schaltbuchse 51 fixieren.

Die vorbeschriebenen Ausführungsformen der Schaltbuchse 51 sind sowohl für ein NO-Ventil als auch ein NC-Ventil einsetzbar.

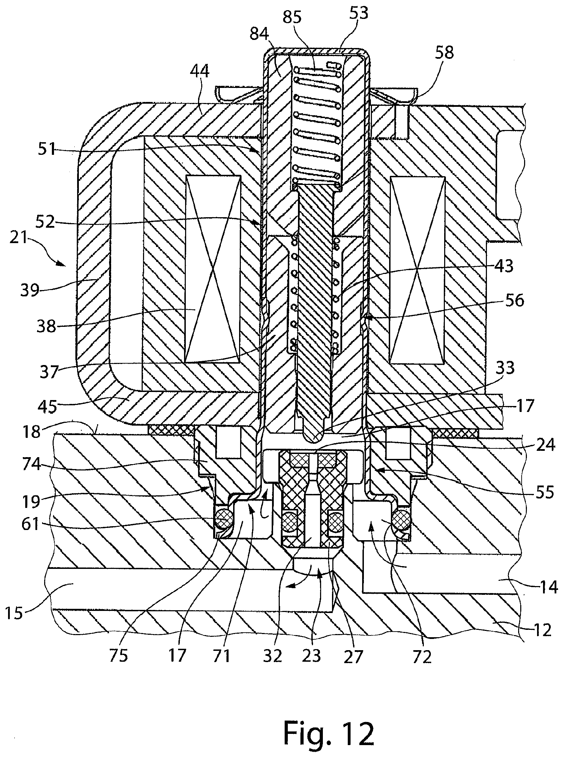

In Figur 12 ist eine schematische Schnittansicht einer alternativen Ausführungsform des Schaltventils 11 zu Figur 11 dargestellt. Dieses Schaltventil 11 gemäß Figur 12 ist als ein direkt geschaltetes NO-Ventil ausgebildet. Bei dieser Ausführungsform ist - wie bei Figur 9 - der Ventilkolben 27 fest mit dem Ventilgehäuse 12 verbunden. Dadurch wird durch den Stößel 35 ausschließlich ein Öffnen und Schließen der Durchgangsbohrung 32 angesteuert, welche vorzugsweise der Pilotbohrung 32 entspricht. Die Ausgestaltung der Schaltbuchse 51 als auch deren Befestigung sowie die Montage der Wegerzeugungseinrichtung 21 zum Ventilgehäuse 12 entspricht der Ausführungsform gemäß Figur 11.

Der Aufbau der Wegerzeugungseinrichtung 21 gemäß Figur 12 entspricht dem Aufbau in Figur 10 oder 11 mit der Ausnahme, dass das Pilotventil 31 nicht axial verschiebbar im Führungsabschnitt 55 der Schaltbuchse 51 geführt ist. Anstelle des bewegbaren Pilotventils 31 aus Fig. 11 ist der Ventilkolben 27 fest im Ventilgehäuse 12 vorgesehen. Ein zum Kern 37 der Wegerzeugungseinrichtung 21 weisender Ringbund des Ventilkolbens 27 ist im Führungsabschnitt 55 der Schaltbuchse 51 positioniert. Dieser Ringbund des Ventilkolbens 27 weist seitlich offene Durchgangskanäle oder Durchgangsbohrungen auf, sodass das Kältemittel von der Zuführöffnung 14 in die Kammer 17 und von dort aus über die Pilotbohrung 32 zur Abführöffnung 15 strömen kann.

Der Führungsstift 46 der Wegerzeugungseinrichtung 21 weist an seinem zum Ventilkolben 27 weisenden Ende einen Schließkörper 33 auf, der bei Ansteuerung der Wegerzeugungseinrichtung 21 am Ventilsitz 24 des Ventilkolbens 27 anliegt und die Pilotbohrung 32 - also die Durchgangsbohrung 32 - schließt.

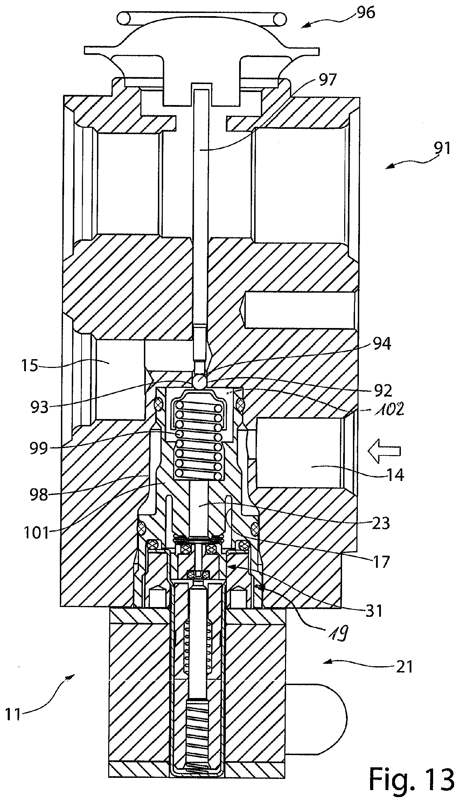

In Figur 13 ist eine schematische Schnittansicht einer alternativen Ausführungsform eines Schaltventils 11 zur Ausführungsform in Figur 10 dargestellt. Das Schaltventil 11 in Figur 13 ist als ein NO-Ventil mit einem Pilotventil 31 ausgebildet und entspricht der Ausgestaltung gemäß Figur 10.

Abweichend zu Figur 10 ist bei dieser Ausführungsform das Ventilgehäuse 12 ein Ventilgehäuse eines Expansionsventils 91. Dieses Ventilgehäuse 12 kann sowohl ein Zwei-Wege- als auch ein Vier-Wege-Gehäuse für ein Expansionsventil 91 ausgebildet sein. Im Ausführungsbeispiel ist ein Vier-Wege-Expansionsgehäuse dargestellt. Zwischen einer Zuführöffnung 14 und einer Abführöffnung 15 ist eine Regulieröffnung 92 vorgesehen, welche einen Ventilsitz 93 umfasst, der eine Ventilkugel 94 zugeordnet ist und in einer Schließposition den Ventilsitz 93 schließt. Über eine Betätigungseinrichtung 96, welche vorzugsweise einen Thermokopf umfasst, wird ein Übertragungsstift 97 betätigt, der auf die Ventilkugel 94 einwirkt und in eine Öffnungsposition überführen kann. Dadurch kann das Kältemittel von der Zuführöffnung 14 zur Abführöffnung 15 strömen und zusätzlich an der Regulieröffnung 94 expandieren. Die Ventilkugel 94 ist an einer Reguliervorrichtung 98 vorgesehen, welche zumindest eine Regulierfeder 99 umfasst, die in einem Reguliergehäuse 101 aufgenommen ist. Dieses Reguliergehäuse 101 ist in das Ventilgehäuse 12 einsetzbar, insbesondere einschraubbar. Das Reguliergehäuse 101 umfasst eine Anschlussöffnung 19, in welcher das Schaltventil 11 einsetzbar ist. Diese Anschlussöffnung 19 entspricht den vorstehend beschriebenen Ausführungsformen, wobei die Anschlussöffnung 19 im Reguliergehäuse 101 vorgesehen ist. Im Reguliergehäuse 101 ist zentral die Durchgangsbohrung 23 vorgesehen, welche in einen Regulierraum 102 mündet, in welcher die Ventilkugel 94 positioniert ist. Die Reguliereinrichtung 96 ist im Ausführungsbeispiel hochdruckseitig angeordnet. Alternativ kann diese auch niederdruckseitig, also der Ventilöffnung 93 nachgeschalten, angeordnet sein. Im Übrigen wird zur Ausführung eines solchen Expansionsventils vollumfänglich auf die DE 10 2004 049 790 A1 Bezug genommen.

Die vorstehenden Ausführungsbeispiele zeigen, dass die Schaltbuchse 51 für das Schaltventil 11 sowohl bei einer Schaltfunktion "Normally Open" oder "Normally Closed" und/oder bei einem direkt geschalteten oder einem mit einem Pilotventil geschalteten Schaltventil 11 einsetzbar ist.

## Patentansprüche

1. Schaltventil zur Regelung eines Massenstromes in einem Kälte- oder Wärmekreislauf,
- mit einer Wegerzeugungseinrichtung (21), welche ein U-förmiges Joch (39) mit einem oberen und unteren Schenkel (44, 45) umfasst, die zueinander ausgerichtet sind und einer innerhalb des Jochs (39) positionierten Spule (38), die elektrisch ansteuerbar ist,
- mit einem zur Spule (38) fest positionierten Kern (37), der zumindest mit einem Abschnitt gegenüber der Spule (38) hervorsteht und in einer Öffnung (47) des Schenkels (44, 45) des Jochs (39) positioniert ist, und
- mit einem in der Spule (38) vorgesehenen Stößel (35), der relativ zum Kern (37) bewegbar ist und mit einem Ende durch eine Öffnung (47) in einem der Schenkel (44, 45) des Jochs (39) hindurchführbar ist,
- mit einem am Stößel (35) angeordneten Schließkörper (33) oder Ventilschließglied (26), und
- mit einem Rückstellelement (43), welches zwischen dem Kern (37) und dem Stößel (35) angeordnet ist,
**dadurch gekennzeichnet,**
- **dass** eine in die Wegerzeugungseinrichtung (21) einsetzbare Schaltbuchse (51) vorgesehen ist, welche einseitig durch einen Boden (53) geschlossen ist und am gegenüberliegenden offenen Ende der Schaltbuchse (51) einen Befestigungsabschnitt (54) aufweist,
- **dass** die Schaltbuchse (51) einen sich zwischen dem Boden (53) und dem Befestigungsabschnitt (54) erstreckenden Kern-Stößel-Abschnitt (52) mit einer zylindrischen Mantelfläche aufweist, in welchem zumindest der Kern (37) aufgenommen und der Stößel (35) geführt ist, und
- **dass** der dem Boden (53) gegenüberliegende offene Befestigungsabschnitt (54) zumindest eine gegenüber dem Kern-Stößel-Abschnitt (52) nach außen gerichtete, umlaufende Schulter (71) oder einen nach außen gerichteten umlaufenden Bund aufweist.

2. Schaltventil nach Anspruch 1, **dadurch gekennzeichnet, dass** die Schaltbuchse (51) sich durch die Öffnung (47) des oberen und unteren Schenkels (44, 45) des Jochs (39) und durch die Spule (38) hindurch erstreckt und vorzugsweise der Boden (53) der Schaltbuchse (51) gegenüber einer Außenseite des oberen oder unteren Schenkels (44, 45) des Jochs (39) hervorsteht und dieser hervorstehende Bereich der Schaltbuchse (51) durch ein Sicherungselement (58) am Joch (39) fixiert gehalten ist.

3. Schaltventil nach einem der vorhergehenden Ansprüche, **dadurch gekennzeichnet, dass** der Kern-Stößel-Abschnitt (52) zur Führung des darin bewegbaren Stößels (35) einen konstanten Durchmesser aufweist.

4. Schaltventil nach einem der vorhergehenden Ansprüche, **dadurch gekennzeichnet, dass** der Kern-Stößel-Abschnitt (52) der Schaltbuchse (51) eine umlaufende Sicke (56) aufweist, durch welche der Kern (37) in der Schaltbuchse (51) fixiert ist.

5. Schaltventil nach einem der vorhergehenden Ansprüche, **dadurch gekennzeichnet, dass** die Schaltbuchse (51) zwischen dem Kern-Stößel-Abschnitt (52) und dem Befestigungsabschnitt (54) zumindest einen aufgeweiteten Führungsabschnitt (55) zur Aufnahme eines Pilotventils (31) aufweist und vorzugsweise ein Innendurchmesser des Führungsabschnitts (55) mit Spiel zum Außenumfang des Pilotventils (31) ausgebildet ist und insbesondere das Befestigungselement (63) auf einen Führungsabschnitt (55) der Schaltbuchse (51) aufgepresst ist und vorzugsweise an der Schulter (71) oder an dem Bund der Schaltbuchse (51) anliegt.

6. Schaltventil nach einem der Ansprüche 2 bis 5, **dadurch gekennzeichnet, dass** der Befestigungsabschnitt (54) an die Schulter (71) eine sich zumindest daran anschließende radiale Umfangsfläche (72) aufweist und vorzugsweise an die radiale Umfangsfläche (72) eine weitere daran angeordnete Aufstandsfläche (75) vorgesehen ist.

7. Schaltventil nach einem der vorhergehenden Ansprüche, **dadurch gekennzeichnet, dass** zumindest der Boden (53), der Kern-Stößel-Abschnitt (52) und der Befestigungsabschnitt (54) der Schaltbuchse (51) einstückig ausgebildet sind.

8. Schaltventil nach einem der vorhergehenden Ansprüche, **dadurch gekennzeichnet, dass** die Schaltbuchse (51), welche zumindest den Boden (53), den Kern-Stößel-Abschnitt (52) und den Befestigungsabschnitt (54) umfasst, als Tiefziehteil oder als Stanzbiegeteil ausgebildet ist.

9. Ventilanordnung zur Regelung eines Massenstromes in einem Kälte- oder Wärmekreislauf,
- mit einem Ventilgehäuse (12), welches eine Zuführöffnung (14) und eine Abführöffnung (15) aufweist und eine dazwischen vorgesehene Durchgangsbohrung (23), an der ein Ventilsitz (24) vorgesehen ist,
- mit einem Schaltventil (11), welches einen ansteuerbaren Stößel (35) mit einem daran angeordneten Ventilschließglied (26) oder Schließkörper (33) aufweist, welcher durch eine Wegerzeugungseinrichtung (21) ansteuerbar ist und in einer Schließposition (28) an dem Ventilsitz (24) oder in einer Pilotbohrung (32) des Ventilkolbens (27) anliegt und die Durchgangsbohrung (23) schließt,
**dadurch gekennzeichnet,**
- **dass** ein Schaltventil (11) nach einem der Ansprüche 1 bis 8 vorgesehen ist, welches mit dem Befestigungsabschnitt (54) der Schaltbuchse (51) am oder im Ventilgehäuse (12) fixiert gehalten ist.

10. Ventilanordnung nach Anspruch 9, **dadurch gekennzeichnet, dass** der Befestigungsabschnitt (54) der Schaltbuchse (51) des Schaltventils (11) an oder in einer Anschlussöffnung (19) des Ventilgehäuses (12) positioniert ist und zumindest ein Dichtelement (61) zwischen einer Anschlussfläche (20) der Anschlussöffnung (19) und dem Befestigungsabschnitt (54) positioniert ist.

11. Ventilanordnung nach Anspruch 9 oder 10, **dadurch gekennzeichnet, dass** die Wegerzeugungseinrichtung (21) am Ventilgehäuse (12) durch zumindest ein lösbares Befestigungselement (63) fixiert ist, welches außerhalb einer Anschlussöffnung (19) am oder im Ventilgehäuse (12), zu der die Schaltbuchse (51) ausgerichtet ist, angreift.

12. Ventilanordnung nach Anspruch 9 oder 10, **dadurch gekennzeichnet, dass** die Wegerzeugungseinrichtung (21) am Ventilgehäuse (12) durch zumindest ein lösbares Befestigungselement (63) angeschlossen ist, welches zwischen dem Joch (39) der Wegerzeugungseinrichtung (21) und dem Befestigungsabschnitt (54) der Schaltbuchse (51) positioniert ist.

13. Ventilanordnung nach Anspruch 12, **dadurch gekennzeichnet, dass** das lösbare Befestigungselement (63) als eine Schraubbuchse ausgebildet ist, welche in ein Innengewinde in der Anschlussöffnung (19) eingreift und vorzugsweise auf einen Führungsabschnitt (55) der Schaltbuchse (51) aufgepresst ist, oder dass das lösbare Befestigungselement (63) als ein Flansch (78) ausgebildet ist, welcher mit dem Ventilgehäuse (12) außerhalb der Anschlussöffnung (19) verbindbar ist oder dass das lösbare Befestigungselement (63) als Schraube ausgebildet ist, welches das Joch (39) der Wegerzeugungseinrichtung (21) zum Gehäuse (12) fixiert.

14. Ventilanordnung nach einem der Ansprüche 9 oder 10, **dadurch gekennzeichnet, dass** die Schaltbuchse (51) des Schaltventils (11) in einer Anschlussöffnung (19) einer ersten Gehäusehälfte (66) des Ventilgehäuses (12) einsetzbar ist und mit einer zweiten Gehäusehälfte (67) des Ventilgehäuses (12) zur ersten Gehäusehälfte (66) fixiert ist.

15. Ventilanordnung nach einem der Ansprüche 9 bis 14, **dadurch gekennzeichnet, dass** das Schaltventil (11) als ein direkt schaltendes Ventil ausgebildet ist, bei welchem der Stößel (35) mit dem Ventilschließglied (26) direkt am Ventilsitz (24) in einer Schließposition (28) anliegt oder dass das Schaltventil (11) ein Pilotventil (31) umfasst, welches zwischen dem Stößel (35) und dem Ventilsitz (24) an der Durchgangsbohrung (23) angeordnet ist, und der Ventilkolben (27) des Pilotventils (31) in der Schaltbuchse (51) oder in der Anschlussöffnung (19) des Ventilgehäuses (12) geführt ist.
